(19)

Europäisches Patentamt
European Patent Office
Office européen des brevets

(11) **EP 2 149 975 B1**

(12) **EUROPEAN PATENT SPECIFICATION**

(45) Date of publication and mention
of the grant of the patent:
**13.08.2014 Bulletin 2014/33**

(51) Int Cl.:
*H02P 6/14* *(2006.01)*        *F02D 41/00* *(2006.01)*
*F02N 11/04* *(2006.01)*        *F02P 7/07* *(2006.01)*

(21) Application number: **09007813.0**

(22) Date of filing: **15.06.2009**

(54) **Method and integrated phasing system for a synchronous electric machine and engine assembly**

Verfahren und integriertes Phasensystem für eine synchrone elektrische Maschine und Motoranordnung

Procédé et système de mise en phase intégré pour une machine électrique synchrone et ensemble de moteur

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.07.2008 IT MI20081420**

(43) Date of publication of application:
**03.02.2010 Bulletin 2010/05**

(73) Proprietor: **C.R.D. Centro Ricerche Ducati Trento S.r.l.**
**38068 Rovereto (TN) (IT)**

(72) Inventors:
• **Venturoli, Alessandro**
  **40134 Bologna (IT)**
• **Negri, Alessandro**
  **38121 Trento (IT)**

(74) Representative: **Brunacci, Marco et al**
**BRUNACCI & PARTNERS S.r.l.**
**Via Scaglia Est, 19-31**
**41126 Modena (IT)**

(56) References cited:
**EP-A2- 1 396 629        WO-A1-2006/090890**
**US-A1- 2004 153 235        US-A1- 2006 152 388**

EP 2 149 975 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention refers to an integrated phasing system that provides the connection of a permanent-magnet synchronous electric machine to an engine by the same drive shaft, with the aim of optimizing the solution of problems encountered in generation of phased signals that are typically present in control systems both in synchronous electric machine and in endothermic motor or engine.

The invention can be applied, for example, to hybrid vehicles in serial configuration, in which it is foreseen a system and a method for controlling a reversible permanent-magnet synchronous electric machine, that is used both as electric motor to start an engine, and as voltage generator to charge electric accumulators or to directly feed electric drive motors of a vehicle.

Another possible application field is referred to vehicles in which it is foreseen to integrate the start motor and voltage generator functions to feed electric loads of a vehicle, in a sole electric machine.

Finally it is possible to embody the invention in applications in which it is used an electric machine, connected to an engine, as torque integrator for a hybrid drive system in parallel layout.

DESCRIPTION OF THE RELATED ART

Control systems for permanent-magnet synchronous electric motors, that are used both to start an engine and as voltage generator in motor-driven vehicles, are widely described, for example, in EP-A-1,138,539 and US-A-5,065,086.

Further it is well-known that in the field of series-connected hybrid motor-driven vehicles, it is often used a DC brushless type permanent-magnet synchronous electric machine, in the following termed as "motogenerator" connected by a voltage converter both to a feeding battery for vehicle electric loads, and to a small engine, to selectively run in drive mode when the engine must be initially started, and in voltage generator mode for charging the feeding battery during the vehicle ride.

Generally speaking a DC brushless motogenerator comprises a stator on which a number of phase windings are wound, and a cup-shaped permanent-magnet rotor, that surrounds externally the stator. In a synchronous electric machine of the described type the stator and rotor magnetic fields must rotate with a same frequency; therefore it is necessary to use a voltage converter and a logic control unit to transform the direct voltage, supplied by one or more batteries, into an alternated voltage necessary to sequentially feed the stator phase windings. The same converter is then used as rectifier when the electric machine runs in voltage generator mode, to charge the battery during the running of the engine.

Then it is very important to know the rotor angular position with a great accuracy, both at the start-up and during the normal running for a proper functioning of a synchronous motor.

Usually it is foreseen to use three conventional Hall probes, positioned inside the rotor of the electric machine, to sense the direction of the magnetic flow generated by rotor magnets.

In a three-phase DC brushless electric motor, by the signal combination of the signals provided by the three Hall probes, six possible winding switching modes may result that allow to establish the rotor position with a maximum error of 30 electric degrees, in which the ratio between the electric degrees $\theta_e$ and mechanical degrees $\theta_m$, is given by the following formula:

$$1) \qquad \theta_e = \theta_m \times p$$

in which "p" is the number of polar pairs in the electric machine; and then each combination of signals supplied by the three Hall probes corresponds to a sole correct working of the converter.

Initially the motor phase windings are not fed, therefore the rotor is at standstill. In this static condition the three Hall probes can usually provide information about the position of the magnetic field of the rotor; such information is used by a control logic to pilot the converter with a proper configuration that allows to feed the phase windings with the right sequence and polarity.

The advantage of this solution is that the three Hall probes supply a precise indication of the instant in which it is necessary to switch the feeding of motor phase windings to generate the required drive torque. For being able to modulate the power supplied by the motor according to requirements, the transistors of low branches of a normal voltage converter are cyclically switched under PWM mode, that is to say by an amplitude modulation of single pulses of square-wave signal at constant frequency, with a variable work cycle, usually known as "duty cycle", that has the effect to change the current supplied to the phase windings of the electric machine.

The main drawbacks encountered using the three internal Hall probes are a great system complexity, liability problems and high costs. In fact it is necessary to provide a suitable support for the three Hall probes to be mounted inside the electric machine, with related wiring harness for connection to a converter, using very narrow spaces, subjecting the probes to high temperatures and vibrations; therefore the use of three internal Hall probes is not always an applicable solution.

The document EP 1 396 629 A2 discloses a rotation detecting apparatus which outputs a detection signal usable for the control of a motor coupled to an engine and for the control of the ignition/fuel injection of the engine.

The apparatus comprises a sensor magnet having magnetized zones in two distinct rows of N poles and P poles alternatively arranged and four magnetic sensor in two groups which are disposed in opposing relation to the individual magnetized zones of the sensor magnet for controlling the motor and for detecting a reference position, respectively.

However, also this device has a great complexity, liability problems and high costs due to the use of four distinct magnetic sensors.

OBJECTS OF THE INVENTION

An object of the present invention is to provide a system and related control method for the foreseen use, to avoid the above mentioned drawbacks.

More particularly, an object of the invention is to provide an integrated phasing method and system for a reversible synchronous electric machine, such as a brushless DC electric machine and for an endothermic motor or engine, as previously stated, by which it is possible to use a sole Hall sensor for establishing the exact switching instant of the feeding phases in the electric motor, and the correct synchronization of phased events of the engine, obtaining in this manner advantages due to simplest construction and installation, system reliability and reduction of cost.

SUMMARY OF THE INVENTION

These and further objectives of the invention can be obtained by an integrated phasing system for an assembly comprising a synchronous electric machine suitable to operate both as electric motor and as voltage generator, more simply motogenerator, and an internal combustion engine, according to claim 1, as well as by a method according to claim 4.

The basic idea on which it is founded the present invention consists in positioning one Hall sensor only, responsive to reluctance changes, close to a toothed wheel operatively connected to a motogenerator, in which the toothed wheel comprises a first magnetic circuit conformed by a plurality of pole pieces or teeth angularly spaced apart by a constant pitch, in which the magnetic circuit of toothed wheel is linked to a second active magnetic circuit of Hall sensor conformed to generate a magnetic flux and to detect a change of the reluctance or magnetic flux generated by an internal magnet, caused by the passage of the pole pieces of the toothed wheel, and to generate a sequence of pilot signals for the motogenerator, and to synchronize the phased events of the engine.

The toothed wheel can be conformed and arranged in any possible way; for example it can form an integral part of the rotor of the electric machine, or may be a separate toothed wheel connected to the output shaft of the engine. As the motogenerator, generally speaking, is conformed with an internal stator having a prefixed number of pole pieces and phase windings, and an external rotor for supporting the permanent-magnets, preferably the toothed wheel is provided directly outside on the peripheral wall of the rotor; in this manner an extremely simple integrated solution is obtained.

According to another feature of the invention, a method to control an motogenerator and an engine has been provided by which it is possible to use one position sensor, consisting of a sole external Hall sensor for the motogenerator, suitably conformed and positioned with respect to internal magnets of the rotor which generate the magnetic field, by which, after having initially fed two stator phases for causing the rotor to reach a prefixed start position, it is possible to cyclically establish the various switching instants of electric motor phases by suitably programming a control logic unit, and by using the same Hall sensor signals for synchronizing the phased events of the engine.

BRIEF DESCRIPTION OF THE DRAWINGS

The above mentioned and further features of a control and pilot method and system for a motogenerator and timing an engine according to the present invention, shall be more clear evident from the following description, made with reference to annexed drawings, in which:

Fig. 1 is a block scheme of the integrated phasing system according to the invention;
Fig. 2 is an electric scheme of the electric machine and electronic converter, with related logic control unit; it is further shown the shared use of the HS signal, supplied by the Hall sensor, between the logic control units of the phasing system;
Fig. 3 is a perspective view of the rotor of the electric machine, integrated with a toothed wheel as position sensor;
Figures 4 e 5 show two different conditions of an active Hall sensor, in relation to different positions of the toothed wheel;
Fig. 6 is a graphic suitable to show both the switching status, and the electric shape of Hall sensor output signals;
Fig. 7 shows a vectorial diagram of the switching sequences of phase windings of the electric machine;
Fig. 8 is an illustrative graphic of phase activation sequences of the electric machine when running as a motor, in PWM mode, referred to the switching sequence of the phase windings;
Fig. 9 shows a flow diagram of software algorithm used in the converter control unit.

DETAILED DESCRIPTION OF THE INVENTION

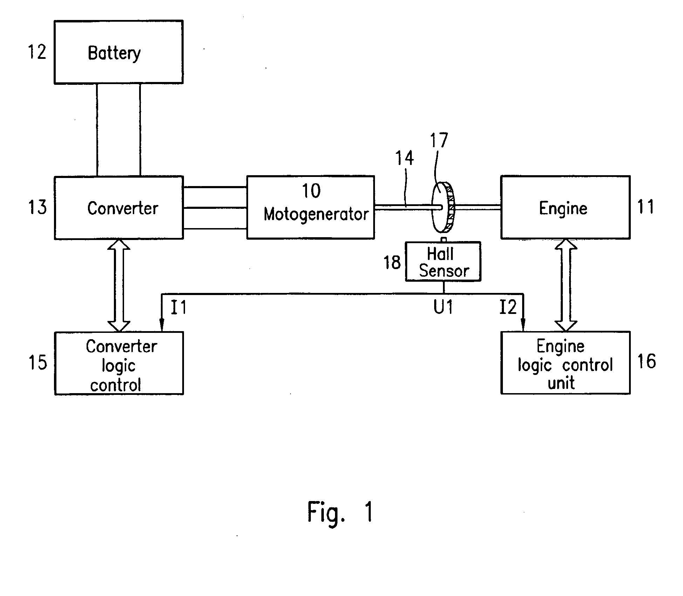

The general features of control and phasing system according to the invention and one of its preferred embodiments shall be described in better details with reference to Figures 1, 2 and 3.

As initially stated, the invention can be applied in a hybrid vehicle using a series configuration, in which an electric storage battery is used to feed one or more electric drive motors of the vehicle and other ancillary services, that must be periodically charged by a voltage generator, substantially conformed by a reversible permanent-magnet synchronous electric machine, suitable to work both in electric motor mode to start an engine, and in voltage generator mode to charge the electric battery.

As shown in the block scheme of Figure 1, the system comprises a permanent-magnet synchronous electric machine 10, for example a brushless DC three-phase machine, more simply referred to as motogenerator, suitable to operate both in motor mode to start an engine 11, and in voltage generator mode to charge an electric storage battery 12, after starting of the engine.

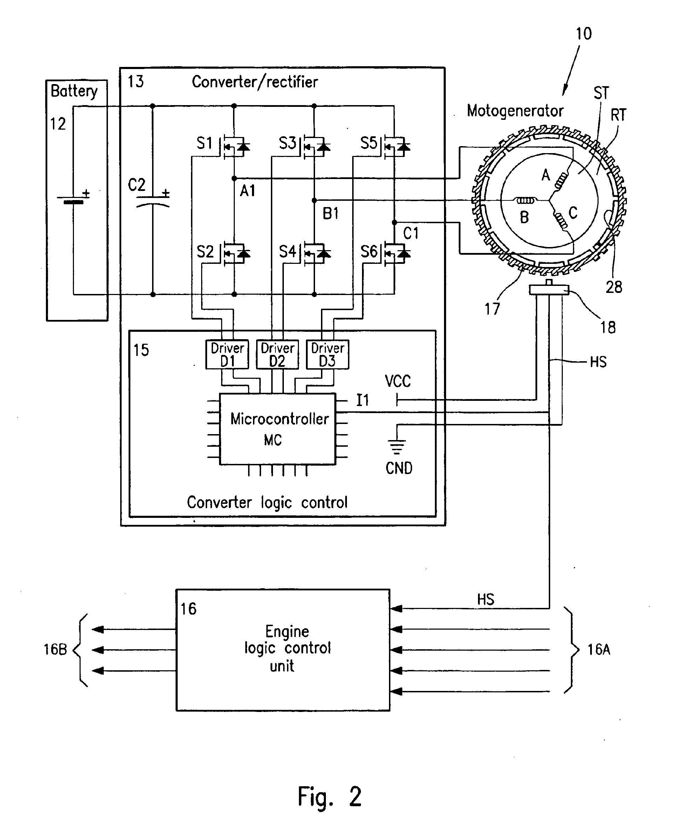

As widely shown in Figure 2, the three-phase windings A, B e C in the stator ST of the motogenerator 10, are connected to the battery 12 by an electronic converter 13; on its turn the rotor RT of the motogenerator 10 is operatively connected to the output shaft 14 of the engine 11, Figure 1, usually consisting of a limited displacement four-stroke single-cylinder engine, e.g. with displacement comprised between 50 and 150 cubic centimetres, or slightly higher, suitable for the foreseen application.

With reference again to Figure 1, the converter 13, in both operative modes of the motogenerator 10, is controlled by a logic unit 15, while the ignition circuit of the engine 11 in turn is controlled by a related electronic unit 16, of any well-known type.

According to the present invention, the system comprises also a sensor for detecting the angular position of the rotor RT of the motogenerator 10, schematically represented in Figure 1 by a toothed wheel 17 connected to the drive shaft 14, and by an active type Hall sensor 18, positioned outside the rotor RT, as described further on.

The toothed wheel 17 comprises a first magnetic circuit provided by a plurality of protruding tooth or pole pieces angularly spaced apart by a constant pitch, while the Hall sensor 18 comprises a second magnetic circuit linked to the previous magnetic circuit of the toothed wheel 17, to generate a magnetic flux and to detect the reluctance and flux changes caused by the passage of the teeth of the wheel 17, and to output a signal sequence sent to related inlets of both control units 15 e 16. More precisely, an outlet U1 for the signals of Hall sensor 18 is connected to a signal inlet I1 of control unit 15, respectively to a signal inlet I2 of control unit 16.

An electric solution of the motogenerator 10, converter 13, logic control unit 15, the position sensor conformed by the toothed wheel 17 and the Hall sensor 18, shall be now described with reference to Figure 2, where the same reference numbers of Figure 1 are used for indicating similar or equivalent parts.

The DC/AC power converter 13 coverts the direct voltage supplied by the electric battery 12 into an alternated voltage to feed in sequence the three-phase windings A, B e C of the motogenerator 10 when running in motor mode, under the control of logic unit 15.

Referring to the described case, the converter 13 comprises six transistors S1-S6, e.g. six field effect transistors, MOSFET, that are used as switching elements for feeding voltages to the three-phase windings A, B e C.

The six transistors S1-S6 are connected with one another according to a three-phase bridge configuration, comprising three branches A1, B1 and C1, in which the terminals on the DC side of the converter 13 are connected to a capacitor C2 in parallel to the battery 12. The converter 13 on the AC side comprises further three terminals, each connected to a related phase winding of the motogenerator 10.

On its turn the Hall sensor 18 comprises a first terminal fed with a VCC voltage, a second ground terminal GND and a third terminal HS for transmitting signals both to the inlet I1 of microcontroller MC of the control unit 15, and to the inlet 12 of the control unit 16.

In Figure 2, the reference 17 shows again the toothed wheel of the position sensor, while the reference 28 schematically shows the permanent-magnets of rotor RT of the motogenerator 10.

The terminal HS of Hall sensor 18 is further connected to the control unit 16 that, as shown by 16A, receives at the inlet side data and control parameters of the engine, such as the engine temperature, the external temperature and pressure, lambda probe signal, and other parameters, emitting at the outlet 16B phase signals for the ignition circuit, the fuel injection and timing of the engine idling speed.

With reference again to the circuit in Figure 2, it can be seen that each couple of transistors S1-S6 of the converter 13 has its control terminals connected to driver circuits D1, D2 e D3, piloted by the microcontroller MC that controls the whole system.

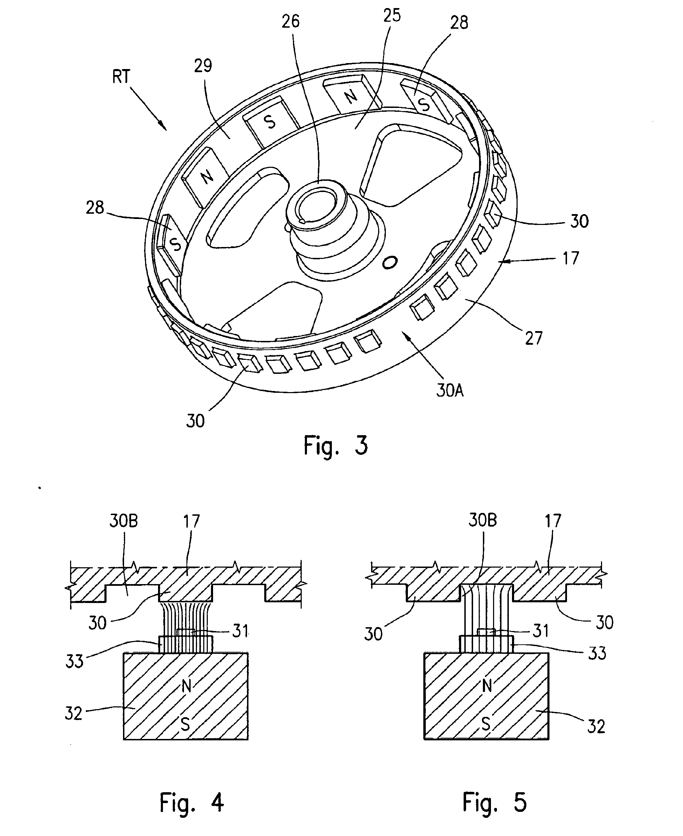

The Figure 3 shows a particular integrated solution of the toothed wheel 17 and rotor RT of the motogenerator 10. As previously stated, a permanent-magnet synchronous electric machine, suitable to operate both in motor mode and in voltage generator mode, is substantially conformed by a stator ST, shown schematically in Figure 2, on which three star connected phase windings A, B, C are wound, and by a permanent-magnet rotor RT, arranged peripherically around the stator ST.

In detail, the rotor RT is conformed by a cup-shaped hollow body, having a bottom wall 25 provided with a hub 26 to be connected to a drive shaft, e.g. the output shaft 14 of engine 11. The cup-shaped rotor RT further comprises a cylindrical wall 27 provided to surround peripherically the stator ST of motogenerator 10.

The interior side of peripheral rotor wall 27 supports in a fixed manner a plurality of permanent-magnets 28, angularly spaced apart with one another by a constant pitch, which are alternatively polarized radially with opposite polarities N and S, to provide a main magnetic circuit 29.

The peripheral wall 27 of the rotor RT is further conformed with a plurality of external teeth 30 that, together with a same rotor wall 27, define the pole pieces of an auxiliary magnetic circuit linked to a magnetic circuit of Hall sensor 18, as it is explained below.

To correctly piloting of the motogenerator 10, according to the example shown, it is necessary that the tooth number of toothed wheel 17 fulfils the following relationship:

$$2) \quad \text{Teeth No.} = 6xp$$

where p is again the number of pole pairs of rotor RT. Further, as shown always in Figure 3, one of teeth of the wheel 17, in position 30A, is removed to create a void with the aim of solving some control problems both for motogenerator 10 and engine 11, using the signals generated by the Hall sensor 18 to supply both an angular reference signal for the rotor RT, and the timing of the engine 11.

According to the present invention, the Hall sensor 18 is indicated as "active", as it comprises a magnetic circuit suitable to generate a flux linked to the magnetic circuit of the toothed wheel 17, to detect the changes of the magnetic reluctance caused by the passage of the teeth 30; therefore, the Hall sensor 18 is provided with an electronic circuit suitable to supply a digital signal co-related to the rotation speed of rotor RT, at the outlet HS, and further co-related to the position of FR magnetic field of the same rotor RT with respect to the magnetic field of the stator ST.

The position sensor comprises, in addition to the toothed wheel 17, a single Hall element 18 connected to an electric circuit that switches high and low in response to magnetic signals generated by the rotation of the toothed wheel. A Hall sensor suitable for a similar use can be e.g. of the type sold by the United States Company Allegro MicroSystem Inc., designed by Part. No. ATS665, or ATS674.

In short, as schematically shown in Figures 4 and 5, an "active" Hall effect sensor comprises a Hall element 31 in a magnetic field generated by a permanent-magnet 32 faced to teeth 30 of the toothed wheel 17; the Hall element 31 forms part of an electronic circuit 33 suitable to convert the changes of the magnetic flux into electric signals and to supply digital signals of high and low level on its outlet terminal HS, when a tooth 30 and a void 30B of the toothed wheel 17 crosses said magnetic field.

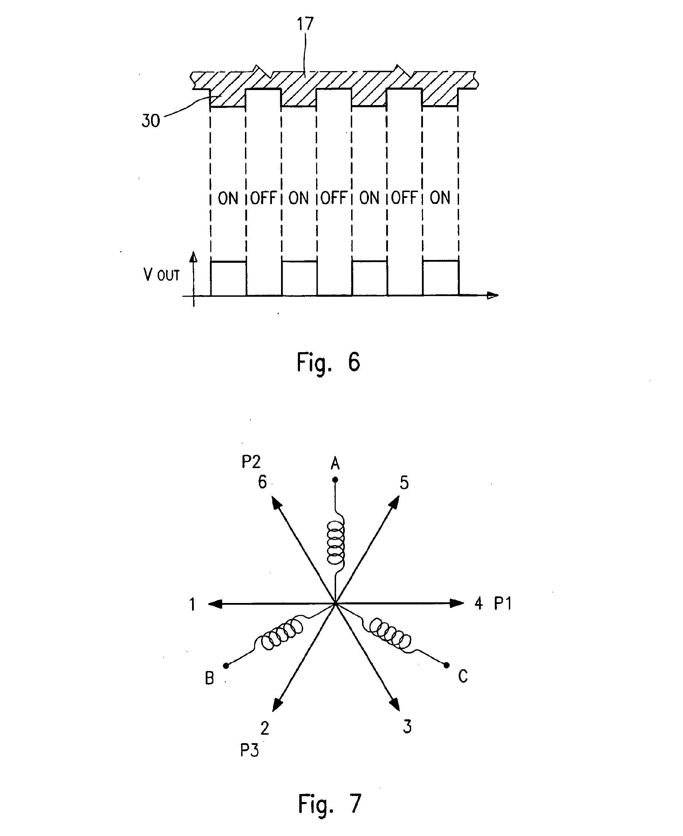

The Figure 6 shows the shape of electric signals "Vout" at the outlet HS of position sensor, according to a situation in which a tooth 30 of the toothed wheel 17, Figure 4, or a void space 30B between contiguous teeth, as shown in Figure 5, is facing the Hall element 31.

The working of the control and piloting system of the motogenerator 10 shall be now described with reference to the remaining figures.

During the running as motor mode, it is necessary to establish the correct switching instant of phase windings A, B e C, Figure 7, using the single Hall effect sensor 18 positioned externally in front of the rotor RT.

In order the piloting of motor 10 correctly occurs, it is necessary that the number of pole pieces or teeth 30 of the toothed wheel 17 satisfies the previously indicated relationship 2:

$$\text{Teeth No.} = 6xp$$

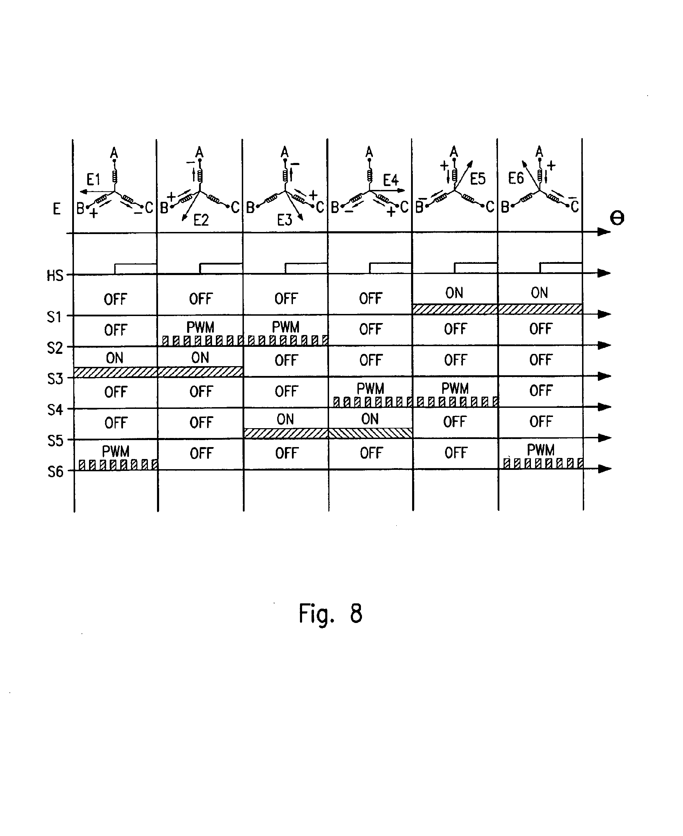

in which p is always the number of pole pairs of the motor, and the number 6, in the case of a three-phase synchronous machine, are the possible states of converter 13 as shown by E1-E6 at the line E in Figure 8, in which there are shown the flowing directions of currents I and the corresponding field vector E1-E6 obtained feeding contemporaneously two sole phases.

Providing a correct phasing among the magnets 28 of rotor RT and the external Hall sensor 18, this last generates the square-wave signal "Vout" in Figure 6, whose rising or descending ramps coincide with the ones generated by the combination of a usual Hall system including three internal probes.

The system comprising the toothed wheel 17 and related external active Hall sensor 18 is then suitable to perfectly replace the usual three internal Hall probes, both when the motogenerator 10 runs at constant speed, and when the speed is variable, as e.g. in start-up transient period or under mechanical load changes; yet this is true only if the motogenerator 10 was correctly positioned at the start-up phase.

In fact the signal, supplied by the single Hall sensor 18 when the motogenerator 10 is standstill, does not supply any information of the initial rotor position that on the contrary is well-known by using the three internal probes. The solution of this problem is to force the rotor RT to be brought to an initial position known a priori; this is obtained by feeding with a pre-established configuration, two phases of the motogenerator 10 and awaiting that rotor RT reaches the required start position shown by P1 in Figure 7.

In this situation the rotor turns of a maximum angle that is given by the following formula:

$$3) \quad \alpha_{MAX} = 360°/(2xp)$$

the angle $\alpha_{MAX}$ is lower in machines having many poles.

As the rotation of the rotor RT, during each start-up, can occur in an arbitrary manner into clockwise or anticlockwise direction, it is important to estimate the angle $\alpha_{MAX}$, above all in applications in which a reverse rotation, also of little angles, can became harmful.

When the rotor is aligned to the pre-established start position, it is possible to act in analogous manner for a conventional drive having three internal probes, or piloting the converter 13 with the same configurations of Figure 8, a pair of phase winding are cyclically powered, in sequence, for the generation of the rotational magnetic field of stator ST, suitable to drive the rotor RT in the desired rotational direction.

The optimal instant to switch the feeding of the phases, in this case is provided by any rising or descending ramp, according to the system works with positive or negative logic of the square-wave signal supplied by external Hall sensor, as shown by HS in Figure 8.

To allow a correct working of this system, it is necessary that at start-up, in the initial positioning phase P1, the torque developed by the motogenerator 10 working in motor mode is sufficient to move the rotor RT, so that its field vector coincides with position P1. Differently, as the control logic 15 at start-up considers the rotor RT always as being in position P1, the consequence is that the following operation of the piloting sequence is no more correct: in this situation the motogenerator 10 can remain locked or, if it can turn, it develops a very low drive torque, that could not be sufficient to exceed an eventual increment of applied load.

For obtaining that the rotor RT reaches the start-up position P1 the first piloting sequence must be applied during a certain time interval Δ t1, included between the instant t1 at which the voltage is applied to the motogenerator 10 and the instant t2 at which the second piloting sequence, corresponding to position P2 in Figure 7 is activated. The time interval Δt1 must be established by experimental tests, evaluating if the selected value is also suitable in the worse condition, that is to say when the rotor is positioned in the farthest point starting from the start-up position P1, and when the resisting torque is maximum at low revolutions number. It is difficult to forecast theoretically the maximum positioning time, as it must considered that the rotor RT, before being stabilized in the position P1, can swing many times around this position owing to the mechanical inertia of the rotor mass; further this initial phase can suffer the influence of other factors, such as voltage and load changes, or other ones.

Nevertheless it can occur that the rotor RT being in a particularly unfavourable start position cannot reach the point P1: denoting by θ the angle between the magnetic field vector of the rotor and the field vector of the stator, when θ=180° the motor torque is zero. For avoiding these problems, after having activated the position P1 during a time Δt1, the switching to the position P2 in Figure 7 is made, keeping it active during a certain time interval Δt2, this also being necessarily established by experimental tests, but in any case having a length shorter than Δt1. In this manner if the rotor does not reach the position P1, it can directly turn in all cases to the position P2, as in this case θ is different from 180°.

The time interval Δt2 is comprised between the instant t2 already defined, and the instant t3 in which the third piloting sequence, position P3 in Figure 7 is activated. Passing the rotor RT from position P2 to position P3, the Hall sensor 18 generates the square-wave signal HS of Figure 8, by which it is possible to use the first valid wave ramp to activate the following switching E3, while the preceding wave ramps of signal HS are ignored by the control logic 15; then the cycle goes on by cyclically activating, in sequence, the configuration rows E in Figure 8.

Further this strategy allows the setting of Hall sensor 18: in fact each time in which the electronic circuit 33 of the sensor 18 is activated, some internal parameters must be set to detect the difference of the magnetic flux intensity when the sensors faced to a tooth 30 and to a void space 30B respectively, and consequently to generate the right electric output signal as shown in Figure 6. For making this operation, it is sufficient to turn the rotor of an angle suitable to cause at least a tooth 30 and a void space 30B exceed the sensor 18; therefore during this setting operation, the first two ramps of the square-wave signal cannot be used to synchronize the switchings. Therefore the sensor 18 can make the above mentioned setting during the positioning phases P1 and P2, in which the ramps of square-wave signal are ignored.

During the positioning in P1 or P2, in which the rotor is locked, it is necessary to limit the current by establishing the duty cycle value of the PWM signal that pilots the transistors of the converter 13. This parameter that is also established experimentally, in general differs from the one associated to the PWM signal used for modulating the power delivered by the motogenerator 10.

Now it is possible to establish the advantages of a system having an external Hall probe and a toothed wheel in the case in which the motogenerator 10 is operatively connected to an engine 11.

In the considered case, the engine 11 is of four-stroke, single-cylinder, little displacement, type; therefore it is necessary to be able to modulate the delivered power and, at the same time, to minimize the fuel consumptions and the harmful emissions in any work condition. For this aim the engine is controlled, in a well-known manner, by a specific control unit 16, that has the aim to time in a precise manner all of so-called phased events, such as e.g.: the spark ignition instant, the coil charging duration for the ignition, the opening instant of engine gasoline injectors, the monitoring of the lambda probe, temperature and for pressure sensors.

Then the control unit 11 requires a signal that indicates the piston position inside the cylinder: in automotive field it is widely diffused the use of an inductive sensor, usually said pick-up sensor, that allows to get a pulse signal filtered by a clipping electronic circuit to provide a square wave. But a pick-up device is a passive sensor that does not require external feeding; further, as the pick-up uses the passage of a tooth to generate a pulse, it cannot supply an appreciable signal when the toothed wheel turns at low speed, generally lower than 100 r.p.m..

Further the control unit 16 must receive information related to the absolute phase of the engine, that is to say it must recognize a condition which corresponds to a well-known position of the piston. To this regard according to the invention a toothed wheel is used having an established number of equidistant teeth D, some of which H being removed to provide a void space greater than the space existing between the teeth; in a typical toothed wheel used in automotive field: D=24 e H=2.

Considering the assembly comprising the motogenerator 10 and engine 11, considering further that an active Hall sensor 18 operates also in a static condition of the system, it can be observed that the control and piloting system according to this invention allows to get a further advantage, including the replacement of conventional toothed wheel and pick-up system, that in any case is necessary to control the engine, with the same position sensor comprising the modified toothed wheel 17 and an active external Hall sensor 18 used to pilot the motogenerator 10; all these advantages can be obtained with reduced costs and better reliability with respect to conventional solutions.

Therefore, according to the invention, the toothed wheel 17 and external Hall sensor 18 have a double function: the first one is to provide the correct switching instant of the phases A, B and C to pilot the motogenerator 10 at the start-up of the engine 11, the second one includes the synchronization of all of phased events of the same engine.

Now it shall be described the problematic technical aspects and a possible compromise to apply the system according to the invention for an assembly comprising the motogenerator 10 and the engine 11.

The signal generated by Hall sensor 18 is used by both control units 15 and 16, allowing in this manner to eliminate the square-wave generation circuit usually provided in a conventional control unit.

As it would be too much expensive to use two separate toothed wheels, one for the motogenerator 10 and the other one for the engine 11, according to a particular feature of the invention, as shown in Figure 3, it is obtained a valid integrated solution by the use of a sole toothed wheel provided on the external wall surface of the rotor RT of the motogenerator 10. Considering the example of an electric three-phase machine, the number of equispaced teeth must be equal to six times the number of pole pairs of motogenerator, D=6xp, but a tooth is removed, as shown, in position 30A in Figure 3, for being able to establish the absolute phase of the engine.

This compromise affects the correct control of the whole system in a very negligible manner, as the further complications introduced by the use of a sole toothed wheel can be solved by suitable software algorithms stored in the two control units 15 and 16.

For example, considering a motogenerator 10 having fourteen poles, in which p=7; it must be provided a toothed wheel 17 with 7x6=42 equidistant teeth, and must be eliminated at least one tooth, then the toothed wheel 17 shall have D=42-1 teeth.

In the case of a polyphase machine, the number of teeth D is given by:

$$4) \qquad D = 2 \times n \times p$$

where "p" is always the pole pair number of the machine and "n" is the phase number. For example in a pentaphase machine with 16 poles the tooth number D is:

$$5) \qquad D = 2 \times 5 \times 8 = 80.$$

As for the control software of the engine, the change from the classic toothed wheel with D=24-2 to the toothed wheel with D=42-1 causes a greater critical condition in the control of time events synchronized with the same toothed wheel. For causing these events with the toothed wheel in which D=42-1 a time interval is disposable that is about one half the time of a conventional toothed wheel; further, the void space being of a sole tooth 30A, instead of two teeth; this increases the probability that the absolute engine phase is not correctly established.

The first problem is solved by reducing the execution times of software algorithms correlated to the toothed wheel 17, while the second problem is solved by selecting in a more accurate manner the time parameters that allow the software to sense the void space 30A corresponding to the removed tooth.

As previously stated, the passage from an ideal wheel with 42 teeth to a wheel with a number of teeth D=42-1 introduces some problems related to the absence of a tooth for the software of the unit 15, that controls the converter 13. In fact, when the Hall sensor is opposed to the void space 30A, it generates an output square-wave signal, in which a positive front and a negative front related to the removed tooth are lacking; as for the correct piloting of the motogenerator 10 it is not possible to omit any switching, it is necessary to adapt the software of the control unit 15 to the new features of the signal generated by Hall sensor 18.

For solving this problem it is important to note that the position of the void space 30A is well-known in the range of 360 electric degrees: considering the case of a sole lacking tooth, it can be established experimentally which field vector of piloting sequence E1-E6 is related to the void space between the teeth, due to the removed tooth, e.g. the phase E6 in Figure 8, corresponding to the position P2 in Figure 7.

At this point, before the passage of the void space 30A caused by the lacking tooth, it is sufficient to activate a peripheral timer of the microcontroller MC in the control unit 15 for the converter 13, which, after a time At forces the successive switching also in absence of a signal wave ramp generated by the Hall sensor. The parameter $\Delta t$ is equal to the time elapsing between two preceding switchings. Obviously this requires an approximation, but the involved error is completely negligible as the rotor speed, in correspondence with the void space 30A, changes limitedly also during the start-up transient period.

In an electric machine with a number of pole pairs p more than 1, the switching that could occur in correspondence of the void space 30A related to the lacking tooth, occurs "p" times for each complete revolution of rotor RT, while the void space occurs one sole time per revolution of the toothed wheel.

Then the control software of unit 15 must be suitable to detect the position of void space 30A, corresponding to detection of the absolute phase of engine, to generate a number of time parameters. This operation must be possibly made within the first complete revolution of the rotor RT, so that, in the successive revolutions, one virtual switching only is activated using the timer, with respect to a total of 6 x p switchings for each revolution.

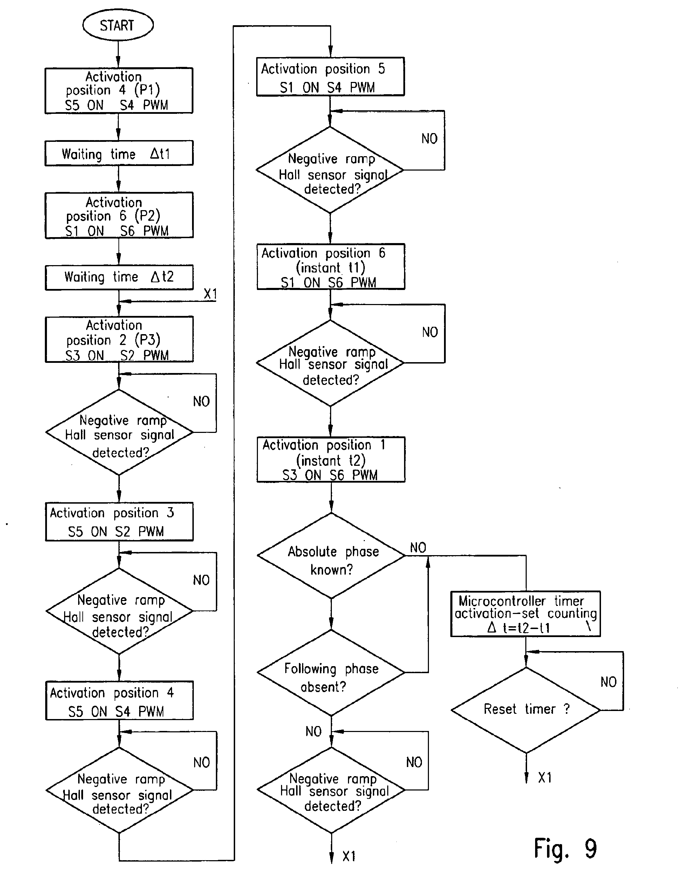

The flow diagram in Figure 9, descriptive of the control algorithm, shall be shortly discussed in the following, making reference to Figures 3, 7 and 8.

At the activation of initial position P1, in which S5 is in ON state, and S4 in PWM mode, after an initial time $\Delta t1$, as previously stated, the following position P2 it is activated, in which S1 is ON, while S6 is in PWM mode, for a time $\Delta t2$. At this moment the position P3 is activated, coincident with the position E2, in which S3 is ON and S2 is in PWM mode.

If a negative wave ramp of the signal emitted by Hall probe is detected, SI, the cycle activates the position E3 in which S5 is ON and S2 is in PWM mode.

As shown in Figure 9, the routine goes on until the activation of the position E6, at the instant t1, in which S1 in ON and S6 is in PWM; when the negative ramp of the signal generated by the Hall probe is again detected, the position E1 is activated, at the instant t2 in which S3 in ON and S6 is in PWM mode.

At this time, if the absolute phase was not established or, in the case in which it is known, and it is forecast to find the void space 30A for the following switching, the timer of microcontroller MC is activated and the time counting $\Delta t = t2-t1$ is set up; at the end of the time interval $\Delta t$, the position E2 in reactivated.

Otherwise, if the absolute phase has been established and it is not forecast to find the void space 30A in the successive switching, a negative ramp in the Hall sensor signal is detected, SI, and the position E2 is again activated. The cycle is repeated for a time necessary to start the engine.

Once the engine is started under the control of the logic unit 16, the control unit 15 switches the transistors S1-S6 of converter 13 into rectifier mode, allowing to charge the battery 12.

Considering what said and shown in annexed drawings, it shall be understood that an integrated control system for a voltage generator and engine assembly, and related method have been provided, all of which being suitable to obtain the specified objects; therefore other modifications or changes can be made to the system and related control method, without departing from the following claims.

## Claims

1.  An integrated phasing system for an assembly comprising a synchronous electric machine (10) of permanent magnet type and an engine (11), in which the electric machine (10) comprises a stator (ST) having phase windings (A, B, C) and a rotor (RT) provided with a plurality of permanent-magnets (28), operatively connected to said engine (11), and electronic control means (13, 15) conformed to initially operate in motor mode the electric machine (10) at the start of the engine (11), and subsequently to operate in voltage generator mode for charging an electric battery (12), in which the electronic control means comprises:

    - a converter (13) connected between the battery (12) and the phase windings (A, B, C) of the electric machine (10);
    - a first logic control unit (15) for controlling the converter (13);
    - a second control unit (16) for controlling the engine (11); and
    - an angular position sensor (18) for providing the first control unit (15) with control signals indicative of the angular position of the rotor (RT) of the electric machine (10);
    **characterized in that** the angular position sensor (18) comprises:
    - a toothed wheel (17) operatively connected to the electric machine (10) and the engine (11), the toothed wheel (17) being conformed with a first magnetic circuit having a plurality of angularly spaced apart pole pieces (30);
    - an sole external Hall probe (18) facing the toothed wheel (17), consisting of one single Hall sensor (18) comprising a second active magnetic circuit (32) to generate a magnetic flux linked to the first magnetic circuit (30) of the toothed wheel (17), said Hall sensor (18) being conformed and arranged to generate and supply both the first and second control units (15, 16) with a sequence of piloting and timing signals in relation to reluctance changes of the Hall probe (18) caused by the rotation of the toothed wheel (17).

2.  The integrated phasing system according to claim 1, in which the rotor (RT) of the electric machine (10) comprises a cup-shaped body having a peripheral wall (27) which surrounds the stator (ST), **characterized in that** the toothed wheel (17) is provided externally onto the peripheral wall (27) of the rotor (RT).

3. The integrated phasing system according to claim 1, **characterized in that**, the toothed wheel (17) in at least one angular position comprises a void space (30A) extending for an angle greater than the angle of the void space between contiguous tooth (30) of the toothed wheel (17), and **in that** the first logic control unit (15) comprises a microprocessor (MC) and a timing unit programmed to cause a forced switching of the phase windings (A, B, C) of the electric machines (10) in correspondence with said greater void space (30A).

4. A method for piloting an electric machine (10) and for timing phased events of an engine (11) operatively connected to the electric machine (10), by the integrated phasing system according to claim 1, **characterized by** the steps of:

    - forcing the rotor (RT) of electric machine (10) to stably reach a pre-established start position (P1; P2) by feeding two respective phase windings (A, B, C) of the electric machine (10); and
    - generating subsequently a sequence of pilot signals for the electric machine (10) by cyclically powering, each time, a different pair of phase windings (A, B, C) of the electric machine (10).

5. The method according to claim 4, **characterized by** feeding the pairs of phase windings (A, B, C) of electric machine (10) for a time interval ($\Delta$t1) necessary to allow the rotor (RT) to reach a first start position (P1).

6. The method according to claim 5, **characterized in that**, keeping a zero drive torque in the first start position (P1), a subsequent switching of the phase windings (A, B, C) is performed for a time interval ($\Delta$t2) shorter than the previous time interval ($\Delta$t1), for positioning the rotor (RT) in a second angular start position (P2).

7. The method according to claim 5, **characterized by** forcing the rotor (RT) to reach a stabilized condition in the first start position (P1) causing the rotor (RT) to rotate of a maximum angle given by the relation:

$$\alpha_{max}=360/2p$$

where p is the pole pair of the electric machine (10).

8. The method according to claim 4, **characterized by** conforming the toothed wheel (17) of the position sensor (18), in an angular position, with a void space (30A) greater than the void space between contiguous tooth (30) to provide a control signal co-related to an absolute phase of the engine (11) and/or electric machine (10); generating by the Hall sensor (18) a square wave control signal (HS) having no wave ramp in correspondence of said greater void space (30A) of the toothed wheel (17); and causing by said first control unit (15) a phase winding switching, in relation to said lacking wave ramp, after a time interval ($\Delta$t) corresponding to the time elapsed between two previous switching steps.

9. The method according to claim 8, **characterized by** feeding the phase windings (A, B, C) of the electric machine (10) for a time lenght ($\Delta$t1) between an instant in which the voltage is supplied to the electric machine (10), and an instant in which a first pilot switching of the phase windings (A, B, C) is carried out for positioning the rotor (RT) in the first start position (P1) and, in the event of zero torque feeding the phase windings (A, B, C) for a time interval ($\Delta$t2) shorter than the previous one ($\Delta$t1), included between the first pilot switching and a second pilot switching to position the rotor (RT) in a second start position (P2).

10. The method according to claim 4, **characterized by** limiting the current value absorbed by the phase windings (A, B, C), during the positioning of rotor (RT) in the first and/or second start position (P1, P2) by modulating in PWM the control signal supplied to the converter (13).

**Patentansprüche**

1. Integriertes Phasenregelungssystem für eine Anordnung mit einer elektrischen Synchronmaschine (10) des Permanentmagnettyps und einem Motor (11), in welchem die elektrische Maschine (10) umfasst einen Stator (ST) mit Phasenwicklungen (A, B, C) und einen mit einer Mehrzahl von Permanentmagneten (28) versehenen Rotor (RT), die mit dem Motor (11) betriebsfähig verbunden sind, und eine elektronische Steuereinrichtung (13, 15), die so ausgelegt ist, dass diese in einem Motormodus die elektrische Maschine (10) beim Start des Motors (11) anfänglich betreibt und danach in einem Spannungsgeneratormodus zum Laden einer elektrischen Batterie (12) arbeitet, in welchem die elektronische Steuereinrichtung umfasst:

    - einen Wandler (13), der zwischen der Batterie (12) und den Phasenwicklungen (A, B, C) der elektrischen Maschine (10) geschaltet ist;

- eine erste Logik-Steuereinheit (15) zum Steuern des Wandlers (13);
- eine zweite Steuereinheit (16) zum Steuern des Motors (11); und
- einen Winkelposition-Sensor (18) zum Versorgen der ersten Steuereinheit (15) mit Steuersignalen, die auf die Winkelposition des Rotors (RT) der elektrischen Maschine (10) hinweisen; **dadurch gekennzeichnet, dass** der Winkelposition-Sensor (18) umfasst:
- ein Zahnrad (17), das mit der elektrischen Maschine (10) und dem Motor (11) betriebsfähig verbunden ist, wobei das Zahnrad (17) mit einem ersten Magnetschaltkreis versehen ist, der eine Mehrzahl von in einem Winkelabstand angeordneter Pol-Teile (30) aufweist;
- eine einzige externe Hall-Sonde (18), die dem Zahnrad (17) zugewandt ist, bestehend aus einem einzelnen Hall-Sensor (18) mit einem zweiten aktiven Magnetschaltkreis (32), um einen mit dem ersten Magnetschaltkreis (30) des Zahnrades (17) verbundene Magnetfluss zu erzeugen, wobei der Hall-Sensor (18) so ausgebildet und angeordnet ist, dass dieser sowohl für die erste als auch die zweite Steuereinheit (15, 16) eine Folge von Steuer- und Zeitgebersignalen in Bezug auf Reluktanzänderungen der Hall-Sonde (18), die durch Rotation des Zahnrades (17) veranlasst werden, erzeugt und liefert.

2. Integriertes Phasenregelungssystem nach Anspruch 1, in welchem der Rotor (RT) der elektrischen Maschine (10) einen schalenförmigen Körper mit einer Umfangswand (27) umfasst, welche den Stator (ST) umgibt, **dadurch gekennzeichnet, dass** das Zahnrad (17) extern auf der Umfangswand (27) des Rotors (RT) vorgesehen ist.

3. Integriertes Phasenregelungssystem nach Anspruch 1, **dadurch gekennzeichnet, dass** das Zahnrad (17) in wenigstens einer Winkelposition einen Leerraum (30A) aufweist, der sich über einen größeren Winkel als der Winkel des Leerraums zwischen benachbarten Zähnen (30) des Zahnrades (17) erstreckt, und dass die erste Logik-Steuereinheit (15) einen Mikroprozessor (MC) und eine Zeitsteuereinheit umfasst, die so programmiert ist, dass diese ein erzwungenes Schalten der Phasenwicklungen (A, B, C) der elektrischen Maschinen (10) in Übereinstimmung mit dem größeren Leerraum (30A) veranlasst.

4. Verfahren zum Steuern einer elektrischen Maschine (10) und zum Zeitsteuern gephaster Ereignisse eines Motors (11), der mit der elektrischen Maschine (10) betriebsfähig verbunden ist, durch das integrierte Phasenregelungssystem nach Anspruch 1, **ge-**

**kennzeichnet durch** die Schritte:

- Zwingen des Rotors (RT) der elektrischen Maschine (10) eine vorherbestimmte Startposition (P1; P2) stabil zu erreichen, indem zwei jeweilige Phasenwicklungen (A, B, C) der elektrischen Maschine (10) gespeist werden; und
- Erzeugen nachfolgend einer Folge von Steuersignalen für die elektrische Maschine (10), indem jedes Mal ein unterschiedliches Paar Phasenwicklungen (A, B, C) der elektrischen Maschine (10) zyklisch versorgt werden.

5. Verfahren nach Anspruch 4, **gekennzeichnet durch** ein Speisen der Paare von Phasenwicklungen (A, B, C) der elektrischen Maschine (10) über ein Zeitintervall (Δt1), das notwendig ist, um dem Rotor (RT) zu erlauben, eine erste Startposition (P1) zu erreichen.

6. Verfahren nach Anspruch 5, **dadurch gekennzeichnet, dass** unter Beibehaltung eines Null-Antriebsmoments in der ersten Startposition (P1), ein nachfolgender Schaltvorgang der Phasenwicklungen (A, B, C) über ein Zeitintervall (Δt2) durchgeführt wird, das kleiner ist als das vorhergehenden Zeitintervall (Δt1), um den Rotor (RT) in einer zweiten Winkel-Startposition (P2) zu positionieren.

7. Verfahren nach Anspruch 5, **gekennzeichnet durch** ein Zwingen des Rotors (RT), einen stabilisierten Zustand in der ersten Startposition (P1) zu erreichen, was den Rotor (RT) veranlasst, sich um einen maximalen Winkel zu drehen, der **durch** die Gleichung gegeben ist:

$$A_{max}=360/2p$$

in welcher p das Polpaar der elektrischen Maschine (10) ist.

8. Verfahren nach Anspruch 4, **gekennzeichnet durch** ein Ausbilden des Zahnrades (17) des Positionssensors (18) in einer Winkelposition mit einem Leerraum (30A), der größer ist als der Leerraum zwischen benachbarten Zähnen (30), um ein Steuersignal bereitzustellen, das mit einer absoluten Phase des Motors (11) und/oder der elektrischen Maschine (10) korreliert; Erzeugen **durch** den Hall-Sensor (18) eines Rechteckwellen-Steuersignals (HS) ohne einen Wellenanstieg in Übereinstimmung mit dem größeren Leerraum (30A) des Zahnrades (17); und Veranlassen **durch** die erste Steuereinheit (15) einer Phasenwicklung-Schaltung, in Beziehung zu dem fehlenden Wellenanstieg, nach einem Zeitintervall (Δt), das mit der zwischen zwei vorhergehenden Schaltschritten abgelaufenen Zeit korrespondiert.

9. Verfahren nach Anspruch 8, **gekennzeichnet durch** ein Speisen der Phasenwicklungen (A, B, C) der elektrischen Maschine (10) über ein Zeitlänge (Δt1) zwischen einem Zeitpunkt, in welchem die elektrische Maschine (10) mit der Spannung versorgt wird, und einem Zeitpunkt, in welchem eine erste Steuerschaltung der Phasenwicklungen (A, B, C) zum Positionieren des Rotors (RT) in der ersten Startposition (P1) ausgeführt wird und das, im Falle einer Null-Drehmoment-Speisung der Phasenwicklungen (A, B, C) über ein Zeitintervall (Δt2) kürzer als das vorhergehende (Δt1), zwischen dem ersten Steuerschaltvorgang und einem zweiten Steuerschaltvorgang enthalten ist, um den Rotor (RT) in einer zweiten Startposition (P2) zu positionieren.

10. Verfahren nach Anspruch 4, **gekennzeichnet durch** ein Begrenzen des Stromwertes, der **durch** die Phasenwicklungen (A, B, C) absorbiert wird, während des Positionierens des Rotors (RT) in der ersten und/oder zweiten Startposition (P1, P2), indem in PWM das dem Wandler (13) zugeführte Steuersignal moduliert wird.

## Revendications

1. Système de mise en phase intégré pour un ensemble comprenant une machine électrique synchrone (10) du type à aimant permanent et un moteur (11), dans lequel la machine électrique (10) comprend un stator (ST) comportant des enroulements de phase (A, B, C) et un rotor (RT) pourvu d'une pluralité d'aimants permanents (28), connectés de manière fonctionnelle audit moteur (11), ainsi que des moyens de commande électroniques (13, 15) agencés de manière à faire fonctionner initialement en mode moteur la machine électrique (10) au démarrage du moteur (11), et, ensuite, à assurer un fonctionnement en mode générateur de tension pour charger une batterie électrique (12), les moyens de commande électroniques comprenant :

- un convertisseur (13) connecté entre la batterie (12) et les enroulements de phase (A, B, C) de la machine électrique (10) ;
- une première unité de commande logique (15) pour commander le convertisseur (13) ;
- une deuxième unité de commande (16) pour commander le moteur (11) ; et
- un capteur de position angulaire (18) pour fournir à la première unité de commande (15) des signaux de commande indiquant la position angulaire du rotor (RT) de la machine électrique (10) ;
**caractérisé en ce que** le capteur de position angulaire (18) comprend :

- une roue dentée (17) reliée de manière fonctionnelle à la machine électrique (10) et au moteur (11), la roue dentée (17) étant prévue avec un premier circuit magnétique comportant une pluralité d'éléments polaires (30) espacés d'un certain angle les uns par rapport aux autres ;
- une seule sonde de Hall externe (18) faisant face à la roue dentée (17), consistant en un unique capteur de Hall (18) qui comprend un deuxième circuit magnétique actif (32) afin de générer un flux magnétique lié au premier circuit magnétique (30) de la roue dentée (17), ledit capteur de Hall (18) étant prévu et agencé pour générer, et fournir aux première et deuxième unités de commande (15, 16) à la fois, une séquence de signaux de pilotage et de cadencement qui sont en relation avec des modifications de réluctance du capteur de Hall (18) provoquées par la rotation de la roue dentée (17).

2. Système de mise en phase intégré selon la revendication 1, dans lequel le rotor (RT) de la machine électrique (10) comprend un corps en forme de coupelle comportant une paroi périphérique (27) qui entoure le stator (ST), **caractérisé en ce que** la roue dentée (17) est disposée de manière externe sur la paroi périphérique (27) du rotor (RT).

3. Système de mise en phase intégré selon la revendication 1, **caractérisé en ce que** la roue dentée (17) comprend, dans au moins une position angulaire, un espace vide (30A) dont l'étendue angulaire est plus grande que l'angle de l'espace vide entre dents contiguës (30) de la roue dentée (17), et **en ce que** la première unité de commande logique (15) comprend un microprocesseur (MC) et une unité de cadencement programmée pour provoquer une commutation forcée des enroulements de phase (A, B, C) de la machine électrique (10) en correspondance avec ledit espace vide plus grand (30A).

4. Procédé de pilotage d'une machine électrique (10) et de cadencement d'événements phasés d'un moteur (11) connecté de manière fonctionnelle à la machine électrique (10), au moyen du système de mise en phase intégré selon la revendication 1, **caractérisé par** les étapes qui consistent à :

- forcer le rotor (RT) de la machine électrique (10) à atteindre de manière stable une position de départ prédéfinie (P1, P2) en alimentant deux enroulements de phase respectifs (A, B, C) de la machine électrique (10) ; et
- générer ensuite une séquence de signaux de pilotage pour la machine électrique (10) en alimentant, de manière cyclique, à chaque fois une paire différente d'enroulements de phase (A, B, C) de la machine électrique (10).

**5.** Procédé selon la revendication 4, **caractérisé par** une alimentation des paires d'enroulements de phase (A, B, C) de la machine électrique (10) pendant un intervalle de temps (Δt1) nécessaire pour permettre au rotor (RT) d'atteindre une première position de départ (P1).

**6.** Procédé selon la revendication 5, **caractérisé en ce que**, en maintenant un couple d'entraînement nul dans la première position de départ (P1), une commutation ultérieure des enroulements de phase (A, B, C) est effectuée pendant un intervalle de temps (Δt2) plus court que le précédent intervalle de temps (Δt1), afin de placer le rotor (RT) dans une deuxième position angulaire de départ (P2).

**7.** Procédé selon la revendication 5, **caractérisé en ce qu'**il est imposé au rotor (RT) d'atteindre un état stabilisé dans la première position de départ (P1), ce qui oblige le rotor (RT) à tourner d'un angle maximal donné par la relation :

$$\alpha_{max} = 360 / 2p$$

dans laquelle p est le paires de pôles de la machine électrique (10).

**8.** Procédé selon la revendication 4, **caractérisé en ce qu'**il consiste à conformer la roue dentée (17) du capteur de position (18), dans une position angulaire, avec un espace vide (30A) plus grand que l'espace vide entre dents contiguës (30), afin de fournir un signal de commande mis en relation avec une phase absolue du moteur (11) et/ou de la machine électrique (10) ; à générer au moyen du capteur de Hall (18) un signal de commande à onde carrée (HS) ne comportant pas de rampe d'onde, en correspondance avec ledit espace vide plus grand (30A) de la roue dentée (17) ; et à provoquer au moyen de ladite première unité de commande (15) une commutation d'enroulement de phase, en relation avec ladite absence de rampe d'onde, après un intervalle de temps (Δt) correspondant au temps écoulé entre deux étapes de commutation précédentes.

**9.** Procédé selon la revendication 8, **caractérisé par** une alimentation des enroulements de phase (A, B, C) de la machine électrique (10) pendant une longueur de temps (Δt1) entre un instant où la tension est fournie à la machine électrique (10) et un instant où une première commutation de pilotage des enroulements de phase (A, B, C) est effectuée pour placer le rotor (RT) dans la première position de départ (P1), et, dans le cas d'un couple nul, par une alimentation des enroulements de phase (A, B, C) pendant un intervalle de temps (Δt2) plus court que l'intervalle précédent (Δt1), compris entre la première commutation de pilotage et une deuxième commutation de pilotage, afin de placer le rotor (RT) dans une deuxième position de départ (P2).

**10.** Procédé selon la revendication 4, **caractérisé par** une limitation de la valeur du courant absorbé par les enroulements de phase (A, B, C), pendant la mise en place du rotor (RT) dans la première et/ou la deuxième position de départ (P1, P2), au moyen d'une modulation - par modulation de largeur d'impulsion (PWM) - du signal de commande fourni au convertisseur (13).

Fig. 1

Fig. 2

Fig. 3

Fig. 4

Fig. 5

17

30

| ON | OFF | ON | OFF | ON | OFF | ON |

V OUT

Fig. 6

P2

A

6

5

1

4 P1

B

C

2

3

P3

Fig. 7

Fig. 8

START

Activation
position 4 (P1)
S5 ON S4 PWM

Waiting time Δt1

Activation
position 6 (P2)
S1 ON S6 PWM

Waiting time Δt2

X1

Activation
position 2 (P3)
S3 ON S2 PWM

Negative ramp
Hall sensor signal
detected?　NO

Activation position 3
S5 ON S2 PWM

Negative ramp
Hall sensor signal
detected?　NO

Activation position 4
S5 ON S4 PWM

Negative ramp
Hall sensor signal
detected?　NO

Activation position 5
S1 ON S4 PWM

Negative ramp
Hall sensor signal
detected?　NO

Activation position 6
(instant t1)
S1 ON S6 PWM

Negative ramp
Hall sensor signal
detected?　NO

Activation position 1
(instant t2)
S3 ON S6 PWM

Absolute phase
known?　NO

Following phase
absent?　NO

Negative ramp
Hall sensor signal
detected?　NO

X1

Microcontroller timer
activation—set counting
Δt=t2-t1

Reset timer ?　NO

X1

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1138539 A
- US 5065086 A
- EP 1396629 A2